Europäisches Patentamt

European Patent Office

Office européen des brevets

(11) Veröffentlichungsnummer: **0 503 254 A1**

## (12) EUROPÄISCHE PATENTANMELDUNG

(21) Anmeldenummer: **92101326.4**

(22) Anmeldetag: **28.01.92**

(51) Int. Cl.5: **A23G 9/28**, A23G 9/24

(30) Priorität: **11.03.91 DE 4107740**

(43) Veröffentlichungstag der Anmeldung:
**16.09.92 Patentblatt 92/38**

(84) Benannte Vertragsstaaten:
**AT DE FR GB NL SE**

(71) Anmelder: **LUMEN GmbH Nährmittel- und Maschinenfabrik**
**Petzmannsberg 11**
**W-8650 Kulmbach(DE)**

(72) Erfinder: **Gampert, Walter**
**Lehentaler Nussleite 42**
**W-8650 Kulmbach(DE)**

(74) Vertreter: **Rau, Manfred, Dr. Dipl.-Ing. et al**
**Rau & Schneck, Patentanwälte Königstrasse 2**
**W-8500 Nürnberg 1(DE)**

(54) **Vorrichtung für Softeis-Bereiter zum Dekorieren von Speiseeis-Portionen.**

(57) Eine Vorrichtung zum Herstellen von Speiseeis aus einem Speiseeis-Ansatz weist einen Gefrierzylinder (4) auf, der mit einem Entnahmeventil (13) versehen ist. Um den durch das Entnahmeventil (13) entnommenen Speiseeis-Portionen Zugabe-Massen, insbesondere Fruchtmark, in dekorativer Form zugeben zu können, ist das Entnahmeventil (13) mit einer Form- und Zuführ-Einrichtung (42) versehen, in deren Auslaßöffnung (45) Zuführkanäle (49) für die Zugabe-Masse einmünden. Diese Zuführkanäle (49) sind über eine Förderleitung (27) und ein ansteuerbares Ventil (55) mit einem Behälter für die Zugabe-Masse verbunden.

FIG. 2

Die Erfindung betrifft eine Vorrichtung zur Herstellung von Speiseeis nach dem Oberbegriff des Anspruches 1.

Derartige Vorrichtungen sind beispielsweise aus der EP o 225 989 A1 oder der EP o 229 237 A1 bekannt. Wesentlich hierbei ist, daß diesen Vorrichtungen Speiseeis-Portionen einzeln nach Bedarf entnommen werden. Es handelt sich um sogenannte Softeis-Bereiter, die zum Verkauf in Kaufhäusern, Eisdielen und auch zum Straßenverkauf von frisch gezapften Speiseeis-Portionen eingesetzt werden. Es besteht ein Bedürfnis, wahlweise dem Speiseeis Zugabe-Massen insbesondere Fruchtmark od.dgl. zusetzen zu können, und zwar möglichst in dekorativer Weise.

Der Erfindung liegt daher die Aufgabe zugrunde, eine Vorrichtung der gattungsgemäßen Art so auszugestalten, daß einer gezapften Speiseeis-Portion eine Zugabe-Masse in dekorativer Weise hinzugefügt werden kann.

Diese Aufgabe wird erfindungsgemäß durch die Merkmale im Kennzeichnungsteil des Anspruches 1 gelöst. Durch die erfindungsgemäßen Maßnahmen wird erreicht, daß die Zugabe-Masse, beispielsweise farbstarkes Fruchtmark, von außen in die Oberfläche des aus dem Entnahmeventil herausströmenden Speiseeisstranges eingegeben wird Dadurch wird eine besonders attraktive Gestaltung der Speiseeis-Portion erreicht. Dieses Ziel wird durch die Maßnahmen nach Anspruch 2 in noch verbesserter Form erreicht. Insbesondere bei der weiteren Ausgestaltung nach Anspruch 3 wird eine besonders ansprechende Gestaltung der Speiseeis-Portion erreicht, da der aus dem Entnahmeventil herausströmende weiche Speiseeisstrang an seiner Oberfläche wulstartige Erhebungen hat, zwischen denen, also in einer relativen Vertiefung, dann die farbstarke Zugabe-Masse eingebracht ist.

Durch die Weiterbildung nach Anspruch 4 wird eine technisch besonders einfache Lösung geschaffen. Wenn die Form- und Zuführ-Einrichtung vom Entnahmeventil abnehmbar ist, dann ist auch in besonders einfacher Weise eine Reinigung möglich. Um eine gleichmäßige Beaufschlagung aller Zuführkanäle zu erreichen, ist die Weiterbildung nach Anspruch 5 zweckmäßig.

Durch die Zusatzmaßnahme nach Anspruch 6 kann erreicht werden, daß nicht nur an der Oberfläche der Speiseeis-Portion, sondern auch in ihrem Inneren die Zugabe-Masse enthalten ist, so daß verschiedene Geschmacksrichtungen durch die Zugabe-Masse auch dort erreicht werden. Anspruch 7 gibt hierzu eine besonders einfache Ausgestaltung an.

Die Weiterbildung nach Anspruch 8 ermöglicht es, daß einerseits nur Speiseeis ohne Zugabe-Masse gezapft wird und daß andererseits aber auch gleichzeitig beides gezapft wird.

Die Ansprüche 9 und 1o geben an, wie ein Vorrat von Zugabe-Masse der Vorrichtung selber zugeordnet wird.

Weitere Merkmale, Vorteile und Einzelheiten der Erfindung ergeben sich aus der nachfolgenden Beschreibung eines Ausführungsbeispiels anhand der Zeichnung. Es zeigt

Fig. 1     eine Vorrichtung zur Herstellung von Speiseeis in einem schematisierten Vertikal-Längs-Schnitt,

Fig. 2     einen Vertikalschnitt durch ein Entnahmeventil der Vorrichtung entsprechend der Schnittlinie II-II in Fig. 3 und

Fig. 3     einen Querschnitt durch das Entnahmeventil entsprechend der Schnittlinie III-III in Fig. 2.

Die Vorrichtung ist in ihrem Grundaufbau allgemein bekannt, und zwar beispielsweise aus der EP o 225 989 A1 und der EP o 229 237 A1. Sie weist ein über Rollen 1 auf dem Boden 2 abgestütztes, also verfahrbares Gehäuse 3 auf. Im oberen Bereich des Gehäuses 3 ist ein Gefrierzylinder 4 angeordnet, in den über eine Verbindungsleitung ein oberhalb des Gefrierzylinders 4 angeordneter Vorratsbehälter 6 für einen fließfähigen Speiseeis-Ansatz einmündet. Dieser Vorratsbehälter 6 ist über einen an der Oberseite des Gehäuses 3 befindlichen Deckel 7 luftdicht verschließbar.

Im Gefrierzylinder 4 ist ein - zeichnerisch nur angedeutetes - Rühr- und Schabewerk 8 angeordnet, das von einem nicht dargestellten Motor über einen Antrieb 9 antreibbar ist. In den Innenraum 1o des Gefrierzylinders 4 mündet eine nicht dargestellte Druckluftleitung ein. Der Gefrierzylinder 4 ist weiterhin mit einem Kühlmantel 11 umgeben, durch den von einem nicht dargestellten Kälteaggregat kommendes Kältemittel transportiert werden kann. Durch diese Ausgestaltung ist es möglich, daß im Innenraum 1o befindlicher Speise-Ansatz unter gleichzeitigem Lufteinschlag durch Rühren und unter Kühlen Speiseeis, sogenanntes Softeis, hergestellt wird. An dem der Einmündung der Verbindungsleitung 5 in den Innenraum 1o entgegengesetzten Ende des Innenraums 1o mündet aus letzterem ein Verbindungskanal 12 aus, der in ein Entnahmeventil 13 führt, durch das Eisportionen entnommen werden. Die Förderung des Speiseeis-Ansatzes und des fertigen Speiseeises im Innenraum 1o des Gefrierzylinders 4 erfolgt mittels des Rühr- und Schabewerks 8.

Im Gehäuse 3 ist ein von einem Elektro-Motor 14 antreibbarer Luftkompressor 15 vorgesehen, der ohnehin unter anderem zur erwähnten Drucklufteinspeisung in den Innenraum 1o des Gefrierzylinders 4 notwendig ist. Die komprimierte Druckluft wird über eine Druckluftleitung 16 durch einen Filter 17 zu einem Druckluftspeicher 18 befördert.

Es ist ein gesonderter Transportbehälter 19 vorgesehen, der mittels Rollen 2o gegenüber dem Boden 2 abgestützt ist. Er kann mit dem Gehäuse 3 in geeigneter Weise lösbar verbunden sein. In diesem Transportbehälter 19 ist ein Druck-Behälter 21 für eine förderfähige Zugabe-Masse für Eisportionen, insbesondere für Fruchtmark, angeordnet. Dieser Druck-Behälter 21 ist an seiner Oberseite mit einem Zapfkopf 22 versehen, der zum Innenraum 23 des Behälters 21 hin offen ist. In diesen Zapfkopf 22 mündet eine an die Druckluftleitung 16 hinter dem Filter 17 angeschlossene Druckluft-Versorgungsleitung 24 ein, so daß der Innenraum 23 ständig unter Druck steht. Im Zapfkopf 22 ist weiterhin ein bis kurz über dem Boden 25 des Behälters 21 geführtes Tauch-Förder-Rohr 26 angeordnet, das an eine Förderleitung 27 angeschlossen ist. Zwischen dem Tauch-Förder-Rohr 26 und der Förderleitung 27 ist im Zapfkopf 22 ein Rückschlagventil 28 angebracht, das einen Rücklauf aus der Förderleitung 27 in den Innenraum 23 verhindert. Da der obere Bereich des Innenraums 23 unter Gasdruck steht, kann mittels dieses Drucks über das Tauch-Förder-Rohr 26 im Behälter 21 befindliche Zugabe-Masse in die Förderleitung 27 gedrückt und durch diese gefördert werden.

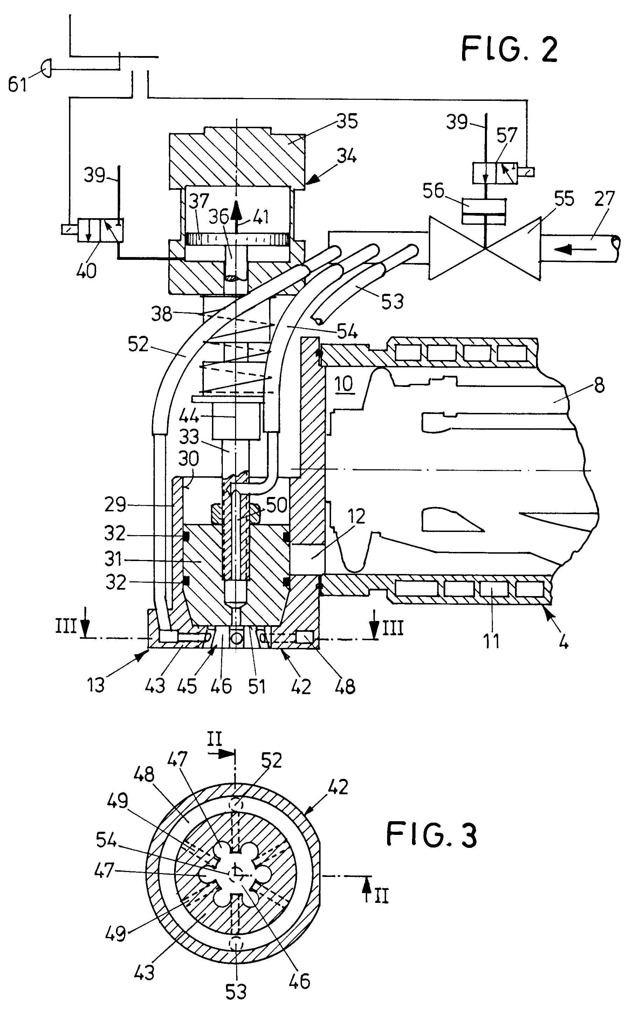

Das Entnahmeventil 13 weist ein Ventilgehäuse 29 auf, dessen Innenwand 3o im wesentlichen kreiszylindrisch und im unteren Bereich sich kegelstumpfförmig verjüngend ausgebildet ist. An dieser Innenwand 3o ist ein Ventilkolben 31 geführt, der zwei im Abstand voneinander befindliche Dichtungen 32 aufweist, die in geschlossenem Zustand des Entnahmeventils 13, der in Fig. 2 dargestellt ist, beiderseits der Einmündung des Verbindungskanals 12 liegen, so daß kein Speiseeis aus dem Innenraum 1o des Gefrierzylinders 4 in das Entnahmeventil 13 gelangen kann.

Der Ventilkolben ist mittels einer Kolbenstange 33 mit einem Linearantrieb in Form eines pneumatisch beaufschlagbaren Kolben-Zylinder-Antriebs 34 verbunden, dessen Zylinder 35 relativ zum Gehäuse 3 ortsfest ist. Die Kolbenstange 33 des Ventilkolbens 31 ist mit der Kolbenstange 36 des Antriebs 34 verbunden, die wiederum mit einem im Zylinder 35 verschiebbar angeordneten Kolben 37 verbunden ist. Zwischen dem Zylinder 35 und der Kolbenstange 33 des Ventilkolbens 31 ist eine Rückstellfeder 38 angeordnet, die den Ventilkolben 31 in seine in der Zeichnung dargestellte geschlossene Stellung drückt. Zum Öffnen des Entnahmeventils wird der Antrieb 34 über eine mit dem Druckluftspeicher 18 verbundene Druckleitung 39 unter Ansteuerung durch ein Magnetventil 4o mit Druckluft beaufschlagt und in Öffnungsrichtung 41 des Entnahmeventils 13 verschoben. Bei Druckentlastung des Zylinders 35 über das Magnetventil 4o schließt die Rückstellfeder 38 das Entnahmeventil 13 wieder.

Das Entnahmeventil 13 weist an seiner Unterseite eine Form- und Zuführ-Einrichtung 42 auf. Diese weist eine Platte 43 auf, in der konzentrisch zur Mittel-Längs-Achse 44 des Entnahmeventils 13 eine Auslaßöffnung 45 für Speiseeis ausgebildet ist. Diese Auslaßöffnung 45 wird im vorliegenden Fall durch eine kreisförmige Mittelöffnung 46 und sechs teilkreisförmige Zusatzöffnungen 47 gebildet, wobei die Zusatzöffnungen 47 deutlich kleineren Durchmesser als die Mittelöffnung 46 aufweisen. Die Zusatzöffnungen 47 sind zur Mittelöffnung 46 hin geöffnet, wie Fig. 3 entnehmbar ist. Daraus ergibt sich, daß durch die Auslaßöffnung 45 ein Speiseeisstrang ausgetragen wird, der einen zylindrischen Kern hat, auf dem gleichmäßig über den Außenumfang verteilt Wülste angeordnet sind.

In der Form- und Zuführ-Einrichtung 42 ist um die Auslaßöffnung 45 herum und im radialen Abstand von dieser konzentrisch zur Achse 44 ein Ringkanal 48 ausgebildet, aus dem Zuführkanäle 49 radial jeweils zwischen zwei benachbarten Zusatzöffnungen 47 direkt peripher in die Mittelöffnung 46 einmünden.

Die Kolbenstange 33 des Ventilkolbens 31 und der Ventilkolben selber sind mit einem Mittelkanal 5o versehen, der koaxial zur Achse 44 aus der der Platte 43 zugewandten Unterseite 51 des Ventilkolbens 31 ausmündet.

In den Ringkanal 48 münden - einander diametral gegenüberliegend - zwei Versorgungsleitungen 52,53 für die Zugabe-Masse ein, während in den Mittelkanal 5o eine dritte Versorgungsleitung 54 einmündet. Zumindest letztere ist flexibel, also zumindest teilweise als Schlauch ausgebildet, da sie die Bewegungen des Ventilkolbens 31 mitmachen muß. Die Versorgungsleitungen 52,53,54 sind an die Förderleitung 27 angeschlossen. In der Förderleitung 27 ist ein Dosier-Ventil 55 angeordnet, das mittels eines pneumatischen Stellantriebs 56 geöffnet oder geschlossen werden kann. Dieser wird mittels eines Magnetventils 57 angesteuert, das wiederum über die Druckleitung 39 mit Druckluft versorgt wird.

Zur Betätigung des Magnetventils 4o, d.h. zum Öffnen des Entnahmeventils 13, ist ein Entnahme-Druckschalter 58 vorgesehen, bei dessen Betätigung das Magnetventil 4o öffnet und der Antrieb 34 mit Druckluft beaufschlagt wird. Zur Aktivierung des Magnetventils 57 ist ein Zusatzschalter 59 vorgesehen, bei dessen Schließen der Stromkreis des Magnetventils 57 mit in den Stromkreis des Magnetventils 4o geschaltet wird. Dies wird durch eine Kontroll-Leuchte 6o am Gehäuse 3 angezeigt. Wenn in diesem Fall der Entnahme-Druckschalter 58 betätigt wird, wird nicht nur das Entnahmeventil 13 geöffnet, sondern auch das Dosier-Ventil 55, d.h. durch die Auslaßöffnung 45 wird nicht nur Speiseeis, sondern auch Zugabe-Masse, beispielsweise also Fruchtmark, ausgetragen, wobei durch den Mittelkanal 5o ein Strang der Zugabe-Masse zentral in das Speiseeis als Kern eingebracht wird, während über die sechs Zuführkanäle 49 Zugabe-Masse in den jeweiligen Grund zwischen den erwähnten Wülsten der Speiseeisportion eingebracht wird. Der Grund zwischen diesen Wülsten der Portion wird also nach außen sichtbar durch diese Zugabe-Masse gebildet.

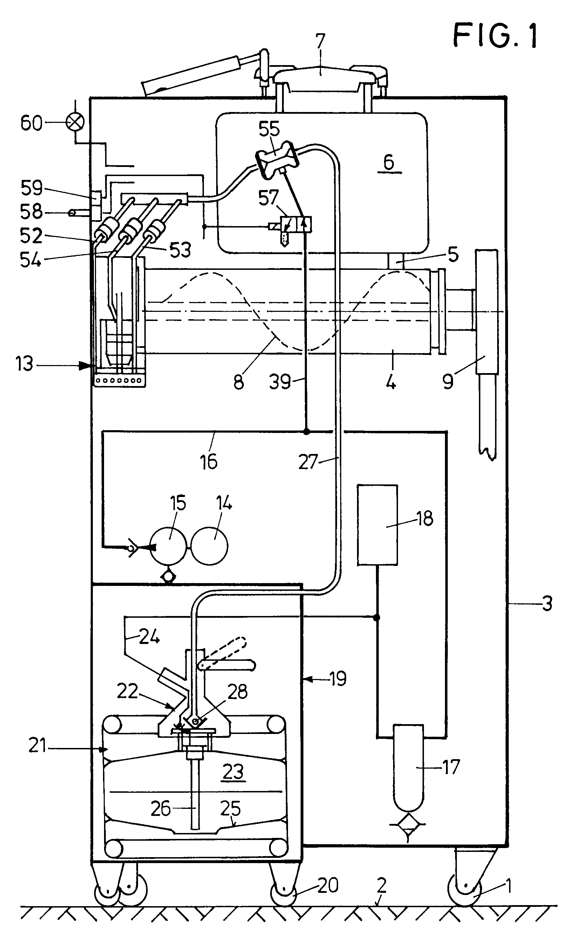

Alternativ zu der vorstehend anhand der Fig. 1 beschriebenen Betätigung des Entnahmeventils 13 und des Dosier-Ventils 55 kann die Betätigung auch mittels eines in Fig. 2 dargestellten Entnahme-Druckschalters 61 erfolgen, der in einer ersten Schaltstellung nur das Magnetventil 4o für das Entnahmeventil 13 betätigt, während er in einer zweiten Schaltstellung sowohl das Magnetventil 4o als auch das Magnetventil 57 für das Dosier-Ventil 55 betätigt.

Wie die vorstehende Beschreibung erkennen läßt, werden saubere, dekorative Streifen auf die Oberfläche des Speiseeis-Strangs aufgetragen. Durch die geschilderten Maßnahmen wird eine Vermischung der Speiseeis-Masse und der Zugabe-Masse verhindert. Dadurch wird gleichzeitig auch eine Geschmacksintensivierung erreicht, da die Speiseeis-Masse und die Zugabe-Masse nicht vermischt werden und letztere an der Oberfläche der Speiseeis-Portion ist, den Geschmacksnerven also zuerst in unveränderter Form zugeführt wird.

**Patentansprüche**

1. Vorrichtung zum Herstellen von Speiseeis aus einem Speiseeis-Ansatz, mit einem Gefrierzylinder (4) und einem mit letzterem versehenen Entnahmeventil (13), das eine Form-Einrichtung (42) für das Speiseeis mit einer Auslaßöffnung (45) aufweist, dadurch gekennzeichnet, daß die Form-Einrichtung als Form- und Zuführ-Einrichtung (42) ausgebildet ist, in deren Auslaßöffnung (45) Zuführkanäle für eine förderfähige Zugabe-Masse einmünden, die über eine Förderleitung (27) und ein ansteuerbares Ventil (55) mit einem Behälter (21) für die Zugabe-Masse verbunden sind.

2. Vorrichtung nach Anspruch 1, dadurch gekennzeichnet, daß die Zuführkanäle (49) in gleichen Winkelabständen in die Auslaßöffnung (45) einmünden.

3. Vorrichtung nach Anspruch 1 oder 2, dadurch gekennzeichnet, daß die Auslaßöffnung (45) durch eine Mittelöffnung (46) und an deren Umfang angeordnete Zusatzöffnungen (47) begrenzt wird und daß die Zuführkanäle (49) jeweils zwischen benachbarten Zusatzöffnungen (47) in die Mittelöffnung (46) einmünden.

4. Vorrichtung nach einem der Ansprüche 1 bis 3, dadurch gekennzeichnet, daß die Zuführkanäle (49) an einen in der Form- und Zuführ-Einrichtung (42) ausgebildeten Ringkanal (48) angeschlossen sind, der wiederum mittels mindestens einer Versorgungsleitung (52,53) mit der Förderleitung (27) verbunden ist.

5. Vorrichtung nach Anspruch 4, dadurch gekennzeichnet, daß der Ringkanal (48) über mindestens zwei Versorgungsleitungen (52,53) mit der Förderleitung (27) verbunden ist.

6. Vorrichtung nach einem der Ansprüche 1 bis 5, dadurch gekennzeichnet, daß etwa konzentrisch zur Auslaßöffnung (45) und zu dieser hin gerichtet ein mit der Förderleitung (27) verbundener Mittelkanal (5o) vorgesehen ist.

7. Vorrichtung nach Anspruch 6, dadurch gekennzeichnet, daß der Mittelkanal (5o) in einem Ventilkolben (31) des Entnahmeventils (13) ausgebildet und mittels einer flexiblen Versorgungsleitung (54) mit der Förderleitung (27) verbunden ist.

8. Vorrichtung nach einem der Ansprüche 1 bis 7, dadurch gekennzeichnet, daß das der Förderleitung (27) zugeordnete Ventil (55) für die Zugabe-Masse und das Entnahmeventil (13) gemeinsam betätigbar sind.

9. Vorrichtung nach einem der Ansprüche 1 bis 8, dadurch gekennzeichnet, daß der Behälter (21) für die Zugabe-Masse als Druck-Behälter (21) ausgebildet ist, der ständig an eine Druckluftquelle (18) angeschlossen ist und der ein mit der Förderleitung (27) verbundenes Tauch-Förder-Rohr (26) aufweist.

10. Vorrichtung nach einem der Ansprüche 1 bis 9, dadurch gekennzeichnet, daß der Behälter (21) in einem verfahrbaren Transportbehälter (19) angeordnet ist.

# FIG.1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 881 663 (WILLIAM B. SEYMOUR) <br> * das ganze Dokument * <br> --- | 1-5,8-10 | A23G9/28 <br> A23G9/24 |
| Y | CH-A-586 515 (SNOW BRAND MILK PRODUCTS CO. LTD.) <br> * das ganze Dokument * <br> --- | 1-10 | |
| Y | US-A-4 116 369 (JOHN V. CROWDER) <br> * Spalte 2, Zeile 3 - Zeile 20; Abbildung 2 * <br> * Spalte 2, Zeile 63 - Spalte 3, Zeile 19 * <br> * Spalte 3, Zeile 57 - Spalte 4, Zeile 23 * <br> --- | 1-10 | |
| A | EP-A-0 221 757 (MORINAGA & CO. LTD.) <br> * Seite 2, Zeile 23 - Seite 3, Zeile 11; Abbildungen 5,6 * <br> --- | 1 | |
| A | WO-A-8 802 990 (DRUMSTICK COMPANY) <br> * Abbildungen 4,6 * <br> --- | 7 | |
| A | US-A-4 793 279 (LAVAL GRENIER) <br> * Zusammenfassung; Abbildung 1 * <br> ----- | 1 | |

**RECHERCHIERTE SACHGEBIETE (Int. Cl.5)**

A23G

Der vorliegende Recherchenbericht wurde für alle Patentansprüche erstellt

| Recherchenort | Abschlußdatum der Recherche | Prüfer |
|---|---|---|
| BERLIN | 10 JUNI 1992 | ALVAREZ ALVAREZ C. |